Europäisches Patentamt

(19) European Patent Office

Office européen des brevets

(11) EP 0 754 655 B1

# (12) FASCICULE DE BREVET EUROPEEN

(45) Date de publication et mention
de la délivrance du brevet:
**26.05.1999 Bulletin 1999/21**

(51) Int. Cl.[6]: **C03B 37/018**

(21) Numéro de dépôt: **96401569.7**

(22) Date de dépôt: **16.07.1996**

(54) **Procédé et appareil de détection d'un état critique de fermeture d'une préforme en verre pour fibres optiques**

Verfahren und Vorrichtung zum Feststellen einer kritischen Stufe während des Kollabierens einer Glasvorform für optische Fasern

Process and apparatus for detecting a critical stage during collapse of a glass optical fibre preform

(84) Etats contractants désignés:
**DK GB NL**

(30) Priorité: **19.07.1995 FR 9508730**

(43) Date de publication de la demande:
**22.01.1997 Bulletin 1997/04**

(73) Titulaire:
**Alcatel Alsthom**
**Compagnie Générale d'Electricité**
**75008 Paris (FR)**

(72) Inventeurs:
• **Regnier, Jean-François**
  **92420 Vaucresson (FR)**

• **Orcel, Gérard**
  **91140 Villebon sur Yvette (FR)**

(74) Mandataire:
**Pothet, Jean Rémy Emile Ludovic et al**
**ALCATEL ALSTHOM,**
**Département de Propriété Industrielle,**
**30, avenue Kléber**
**75116 Paris (FR)**

(56) Documents cités:
DE-A- 3 527 017       DE-A- 3 830 624
FR-A- 2 621 706       GB-A- 2 176 776

## Description

La présente invention concerne de manière générale la fabrication d'une préforme optique. Une telle préforme est destinée à l'élaboration d'une fibre optique.

Plus précisément, l'invention a trait à des procédé et système de détection d'un état critique de fermeture d'une préforme optique lors d'une phase de fermeture de la préforme succédant à une phase de dépôt de couches de matière qui réduit radialement une ouverture formée dans la préforme. La technique de fabrication de la préforme est typiquement de type intra-tube, tel que MCVD pour Modified Chemical Vapor Deposition en terminologie anglo-saxonne.

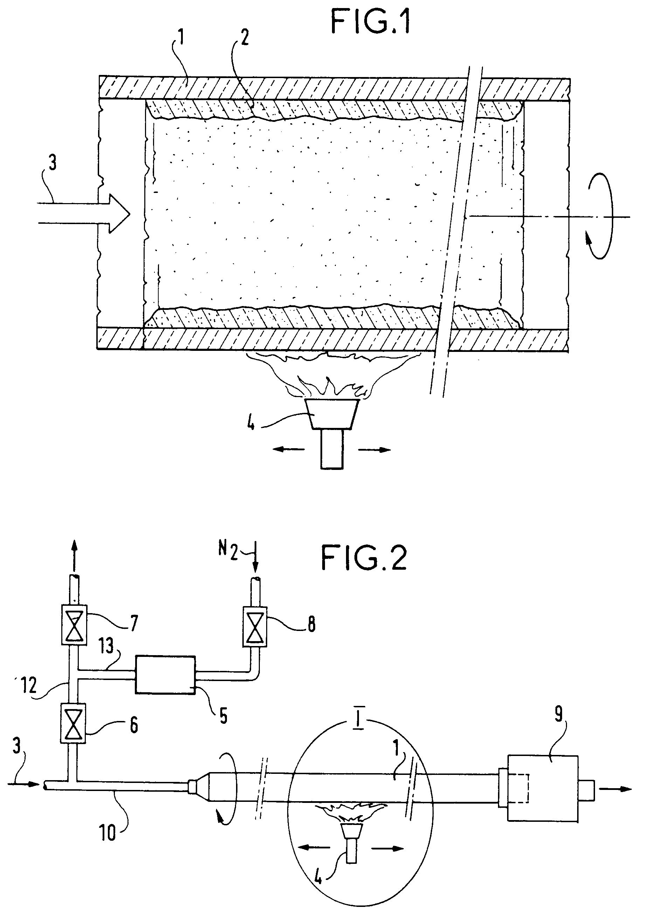

En référence à la figure 1 très schématique, la phase initiale de dépôt de couches de matière pour la fabrication d'une préforme optique est mise en oeuvre de la manière suivante. En partant d'un tube en silice 1, des couches de matière 2, qui formeront des gaine et coeur optiques de la fibre optique ultérieurement extraite de la préforme, sont déposées successivement sur la paroi intérieure du tube 1. Les couches de matière 2 qui sont déposées à l'intérieur du tube 1 résultent de réactions chimiques entre réactifs gazeux 3 injectés à l'intérieur du tube 1. Un élément de chauffage 4 extérieur au tube 1 est prévu pour amener la température à l'intérieur du tube 1 à un niveau suffisant pour que les réactions souhaitées entre réactifs gazeux se produisent. A titre d'exemple, peuvent être citées les deux réactions suivantes entre le tétrachlorure de silicium et l'oxygène d'une part, et entre le tétrachlorure de germanium et l'oxygène d'autre part :

$$SiCl_4 + 0_2 \rightarrow SiO_2 + 2\,Cl_2 \; ; \text{ et}$$

$$GeCl_4 + 0_2 \rightarrow GeO_2 + 2\,Cl_2$$

Un tel dépôt couche par couche offre ainsi la possibilité de façonner très précisément le profil d'indice de réfraction de la fibre optique qui sera issue de la préforme, et cela par un dosage approprié des réactifs 3 injectés dans le tube 1. Le dépôt de ces couches de matière réduit ainsi radialement une ouverture formée dans la préforme en résultat de l'augmentation de l'épaisseur des couches 2.

Dès lors que la totalité de la matière nécessaire à la formation de la préforme est déposée en couches sur la paroi interne du tube 1, la phase de dépôt est interrompue et une phase de fermeture de la préforme lui succède. Pour cette phase de fermeture qui a pour objectif d'assurer une fermeture complète de la préforme, il est prévu d'augmenter la température de chauffage 4 de la préforme et de cesser l'alimentation en réactifs gazeux. Il est néanmoins nécessaire d'injecter sous pression dans l'ouverture formée dans la préforme un gaz, typiquement à base d'oxygène. Ce gaz ne doit être injecté sous pression que jusqu'à un instant critique correspondant à un état critique de fermeture de la préforme. Cet état critique doit être détecté avec une grande précision afin d'éviter, d'une part, tout risque de rétrodiffusion résultant d'une interruption d'injection de gaz antérieure à l'instant critique, et, d'autre part, tout risque d'éclatement de la préforme en cas de poursuite d'injection de gaz postérieurement à l'instant critique.

Selon la technique antérieure, seule l'intervention humaine est prévue pour détecter cet état critique de fermeture de la préforme. Elle se base sur une surveillance visuelle de l'évolution du diamètre de l'ouverture formée dans la préforme. Cette seule intervention humaine limite la fiabilité de l'appréciation de l'instant critique.

D'autre part, il existe des procédés, tels que décrits dans la demande de brevet DE-A-3 525 017 ou dans la demande de brevet GB-A-2 176 776, de maintien de pression constante dans l'ouverture d'une préforme en verre pour les fibres optiques à partir d'un tube, cette ouverture se réduisant radialement en résultat d'un dépôt de couches radiales de matières à l'intérieur du tube.

L'invention vise donc à remédier à cet inconvénient en fournissant un procédé et un système de détection d'un état critique de fermeture d'une préforme optique.

A cette fin, un procédé de détection d'un état critique de fermeture d'une préforme en verre pour les fibres optiques à partir d'un tube lors d'une phase de fermeture de ladite préforme succédant à une phase de dépôt de couches de matière à l'intérieur du tube qui réduit radialement une ouverture formée dans ladite préforme, est caractérisé en ce qu'il comprend les étapes de:

- injection d'un gaz à travers ladite ouverture,
- mesure d'une pression dans un élément de conduit à travers lequel circule ledit gaz, et
- détection dudit état critique de fermeture de la préforme optique en fonction d'une pression courante mesurée.

En réponse à la détection de l'état critique de fermeture de la préforme optique, il est prévu d'ouvrir une vanne d'évacuation dudit gaz injecté de sorte à abaisser la pression s'appliquant dans l'ouverture.

Selon une première variante, la détection est effective dès lors qu'une différence entre la pression courante mesurée et une pression initiale mesurée est supérieure à un seuil prédéterminé.

Selon une seconde variante, la détection est effective dès lors que la pression courante mesurée est supérieure à un seuil prédéterminé.

Un système pour la mise en oeuvre dudit procédé comprenant :

- des moyens de conduit aboutissant à l'une de deux extrémités de ladite préforme,

- des moyens pour injecter ledit gaz à travers ladite ouverture via lesdits moyens de conduit, et caractérisé en ce qu'il comprend :
- des moyens capteurs, en liaison avec lesdits moyens de conduit, pour mesurer une pression dans lesdits moyens de conduit.

Avantageusement, le système comprend, en outre, un moyen de pompe d'aspiration connecté à l'autre des deux extrémités de ladite préforme.

D'autres caractéristiques et avantages de la présente invention apparaîtront plus clairement à la lecture de la description suivante, en référence aux dessins annexés correspondants, dans lesquels :

- la figure 1, déjà commentée, illustre de manière schématique une préforme optique en cours de fabrication et les éléments nécessaires à cette fabrication; et
- la figure 2 montre un ensemble de fabrication de préforme optique selon l'invention équipé d'un système de détection d'un état critique de fermeture de la préforme.

En référence à cette figure 2, selon une réalisation de l'invention, un ensemble de fabrication de préforme optique comprend un tube, typiquement en silice, 1 à l'intérieur duquel sont déposées des couches de matière, un élément de chauffage 4 destiné à chauffer le tube 1, un conduit principal 10 connecté à une source (non représentée) d'injection de gaz 3, un premier conduit de dérivation 12 se connectant en parallèle au conduit principal 10, un second conduit de dérivation 13 se connectant en parallèle au premier conduit de dérivation 12, un capteur de mesure de pression 5, trois vannes 6, 7 et 8 et une pompe d'aspiration 9.

Le conduit principal 10, aboutissant à l'une des deux extrémités du tube 1, établit une liaison hermétique entre la source d'injection de gaz (non représentée) et l'intérieur du tube 1. A l'autre des deux extrémités du tube, est prévue la pompe d'aspiration 9 destinée à refouler le gaz 3 injecté par la source d'injection. Sur le conduit principal 10, est monté en dérivation le premier conduit de dérivation 12 le long duquel sont prévues en série successivement la vanne 6, dite de dérivation, et la vanne 7, dite d'évacuation. En un point situé entre ces deux vannes 6 et 7, se connecte le second conduit de dérivation 13 aboutissant à une source d'alimentation en azote N$_2$. En série sur ce second conduit de dérivation 13, sont montés le capteur de mesure de pression 5 et la vanne 8, dite de purge.

L'ensemble de fabrication de préforme optique montré à la figure 2 est utilisé de la manière suivante. La phase de fermeture de préforme, à laquelle l'invention se rapporte, débute ou bien à la fin de la phase de dépôt de couches de matière durant laquelle des réactifs gazeux 3 (voir figure 1) sont injectés dans le tube pour former ce qui deviendra le coeur de la fibre optique, ou bien à la fin d'une phase d'attaque succédant à la phase de dépôt et durant laquelle des gaz dits agressifs sont injectés dans l'ouverture formée dans la préforme. Durant ces phases de dépôt ou d'attaque, la vanne de dérivation 6 est fermée. Selon l'invention, à la fin de ces phases de dépôt ou d'attaque, coïncidant avec le début de la phase de fermeture, la vanne 6 est ouverte de sorte que l'état du système est le suivant :

- la vanne d'évacuation 7 est fermée,
- la vanne de purge 8 est fermée, et
- la vanne de dérivation 6 est ouverte.

Un gaz 3, à base par exemple d'oxygène, est injecté par la source, via le conduit principal 10, à travers l'ouverture formée dans la préforme 1. En réponse à cette opération, le capteur de mesure de pression 5 mesure la pression courante dans le conduit principal 10 à travers lequel circule le gaz injecté. Cette pression est représentative du degré de fermeture de la préforme. La détection de l'état critique de fermeture de la préforme optique, pour lequel il convient d'ouvrir la vanne d'évacuation 7, s'opère ainsi en fonction de la pression courante mesurée. Deux variantes peuvent être envisagées pour mettre en oeuvre cette détection. Selon une première variante, la détection est effective dès lors que la pression courante mesurée par le capteur 5 est supérieure à un premier seuil prédéterminé. Selon une autre variante destinée à remédier à une éventuelle dérive du zéro du capteur 5, il peut être envisagé que la détection est effective dès lors qu'une différence entre la pression courante mesurée et une pression initiale mesurée est supérieure à un second seuil prédéterminé. En pratique, la pression initiale mesurée est la pression mesurée par le capteur 5 au tout début de la phase de fermeture, après l'opération d'ouverture de la vanne 6.

Le circuit établi par le second conduit de dérivation 13 et par la portion du premier circuit de dérivation 12 qui est situé en aval du point de connexion du second conduit de dérivation et qui inclut la vanne d'évacuation 7, est destiné au nettoyage à l'azote du capteur de pression 5. Ce nettoyage est réalisé par fermeture de la vanne 6, ouverture des deux vannes 7 et 8 et ouverture de la source d'alimentation en azote N$_2$.

L'homme du métier appréciera que la portée de l'invention n'est pas limitée à la réalisation décrite et que, notamment, la mesure d'une pression au moyen d'un capteur peut être obtenue dans un élément de conduit quelconque à travers lequel circule le gaz 3 qui est injecté lors de la phase de fermeture. En outre, il apparaîtra de manière évidente que le procédé de l'invention peut être partiellement ou totalement automatisé. A titre d'exemple, l'ouverture de la vanne 7 d'évacuation du gaz 30 en réponse à la détection de l'état critique de fermeture de la préforme optique peut être automatique. Par ailleurs, bien que la description qui précède se limite à considérer une seule réalisation relative à une préforme optique, l'invention peut s'appliquer à toute autre réalisation qui prévoit la fermeture d'un tube destiné à former une structure donnée, dite "préforme", qu'elle soit optiquement guidante ou pas. Enfin, et pour terminer, il est à noter que l'invention peut être mise en oeuvre de manière différente en utilisant par exemple l'appareillage prévu, selon la technique antérieure, pour appliquer, lors de la phase de dépôt, une contre-pression radiale interne sur les couches de matière déposées. Cet appareillage, situé du côté de la pompe d'aspiration 9, serait alors utilisé dans le cadre de l'invention lors de la phase de fermeture pour injecter un gaz donné dans la préforme en vue de détecter une fermeture de celle-ci par mesure d'une pression résultant de cette injection de gaz.

## Revendications

1. Procédé de détection d'un état critique de fermeture d'une préforme (1, 2) en verre pour les fibres optiques et à partir d'un tube, lors d'une phase de fermeture de ladite préforme (1, 2), succédant à une phase de dépôt de couches de matière à l'intérieur du tube qui réduit radialement une ouverture formée dans ladite préforme,
caractérisé en ce qu'il comprend les étapes de:

   - injection d'un gaz (3) à travers ladite ouverture,
   - mesure d'une pression (5) dans un élément de conduit (13) à travers lequel circule ledit gaz injecté (3), et
   - détection dudit état critique de fermeture de la préforme optique (1, 2) en fonction d'une pression courante mesurée.

2. Procédé conforme à la revendication 1, caractérisé par une étape d'ouverture d'une vanne (7) d'évacuation dudit gaz injecté (30) en réponse à ladite détection de l'état critique de fermeture de la préforme optique (1, 2).

3. Procédé de détection conforme à la revendication 1 ou 2, caractérisé en ce que ladite détection est effective dès lors qu'une différence entre ladite pression courante mesurée et une pression initiale mesurée est supérieure à un seuil prédéterminé.

4. Procédé de détection conforme à la revendication 1 ou 2, caractérisé en ce que ladite détection est effective dès lors que ladite pression courante mesurée est supérieure à un seuil prédéterminé.

5. Système pour la mise en oeuvre d'un procédé conforme à l'une quelconque des revendications précédentes, comprenant :

   - des moyens de conduit (10) aboutissant à l'une de deux extrémités de ladite préforme (1, 2),
   - des moyens pour injecter ledit gaz à travers ladite ouverture via lesdits moyens de conduit, et caractérisé en ce qu'il comprend :
   - des moyens capteurs (5) pour mesurer une pression dans lesdits moyens de conduit.

6. Système conforme à la revendication 5, caractérisé en ce qu'il comprend, en outre, un moyen de pompe d'aspiration (9) connecté à l'une des deux extrémités de ladite préforme (1, 2).

## Claims

1. Method of detecting a critical state of closing of a glass preform (1, 2) for optical fibres and from a tube during a phase of closing of said preform (1, 2) following a phase of deposition of layers of material on the inside of the tube that reduces the radial size of an opening formed in said preform,
characterised in that it comprises the steps of:

   - injecting a gas (3) into said opening,
   - measuring a pressure (5) in a pipe element (13) through which said injected gas (3) flows, and
   - detecting said critical state of closing of the optical preform (1, 2) on the basis of a measured current pressure.

2. Method according to claim 1 characterised by a step of opening a valve (7) for evacuating said injected gas (30) in response to said detection of the critical state of closing of the optical preform (1, 2).

3. Detection method according to claim 1 or claim 2 characterised in that said detection is effective when a difference between said measured current pressure and a measured initial pressure is greater than a predetermined threshold.

4. Detection method according to claim 1 or claim 2 characterised in that said detection is effective when said measured current pressure is greater than a predetermined threshold.

5. System for implementing a method according to any one of the preceding claims, comprising:

   - pipe means (10) connected to one end of said preform (1, 2), and
   - means for injecting said gas into said opening via said pipe means,
   and characterised in that it comprises:
   - sensor means (5) for measuring a pressure in said pipe means.

6. System according to claim 5 characterised in that it further comprises suction pump means (9) connected to one end of said preform (1, 2).

**Patentansprüche**

1. Verfahren zum Erfassen eines kritischen Verschlußzustandes einer Glasvorform (1, 2) für Lichtleitfasern und ausgehend von einer Röhre bei einer Phase des Verschließens der Vorform (1, 2), die einer Phase der Abscheidung von Materialschichten im Inneren der Röhre folgt, die eine in der Vorform ausgebildete Öffnung radial verringert, dadurch gekennzeichnet, daß es die Schritte umfaßt:

   - Einpressen eines Gases (3) durch die Öffnung,
   - Messen eines Drucks (5) in einem Rohrleitungselement (13), durch welches das eingepreßte Gas (3) zirkuliert, und
   - Erfassen des kritischen Verschlußzustands der optischen Vorform (1, 2) in Abhängigkeit von einem gemessenen Strömungsdruck.

2. Verfahren nach Anspruch 1, gekennzeichnet durch einen Schritt des Öffnens eines Ventils (7) zur Evakuierung des eingepreßten Gases (30) in Antwort auf die Erfassung des kritischen Verschlußzustandes der optischen Vorform (1, 2).

3. Erfassungsverfahren nach Anspruch 1 oder 2, dadurch gekennzeichnet, daß die Erfassung wirkt, sobald eine Differenz zwischen dem gemessenen Strömungsdruck und einem gemessen Anfangsdruck höher als eine vorbestimmte Schwelle ist.

4. Erfassungsverfahren nach Anspruch 1 oder 2, dadurch gekennzeichnet, daß die Erfassung wirkt, sobald der gemessene Strömungsdruck höher als eine vorbestimmte Schwelle ist.

5. System zur Ausführung eines Verfahrens nach einem der vorhergehenden Ansprüche, das umfaßt:

   - Rohrleitungsmittel (10), die an einem der beiden Enden der Vorform (1,2) enden,
   - Mittel zum Einpressen des Gases über die Rohrleitungsmittel durch die Öffnung, und dadurch gekennzeichnet, daß es umfaßt:
   - Sensormittel (5) zum Messen eines Drucks in den Rohrleitungsmitteln.

6. System nach Anspruch 5, dadurch gekennzeichnet, daß es außerdem ein Ansaugpumpenmittel (9) umfaßt, das mit einem der beiden Enden der Vorform (1, 2) verbunden ist.

# FIG.1

# FIG.2